# FASCICULE DE BREVET EUROPEEN

(11) **EP 3 311 772 B1**
(45) Date de publication et mention de la délivrance du brevet: **26.02.2020**
(21) Numéro de dépôt: 17194927.4
(22) Date de dépôt: 05.10.2017
(51) Int. Cl.: A61C 13/00, A61C 13/34

(54) **ENSEMBLE POUR LA PRÉPARATION D'UNE PROTHÈSE DENTAIRE**
GESAMTHEIT DER ELEMENTE ZUR HERSTELLUNG EINER ZAHNPROTHESE
KIT FOR PREPARING A DENTAL PROSTHESIS

(30) Priorité: 19.10.2016 FR 1660123
(43) Date de publication de la demande: 25.04.2018
(73) Titulaire: ANTHOGYR, 74700 Sallanches (FR)
(72) Inventeur: BLUM, Benoît, 74700 SALLANCHES (FR); DUPASQUIER, Alexis, 74170 SAINT GERVAIS LES BAINS (FR); RICHARD, Hervé, 73590 NOTRE DAME DE BELLECOMBE (FR)
(74) Mandataire: Cabinet Poncet

(56) Documents cités:
- KR-A- 20130 038 101
- US-A1- 2013 216 980
- US-A1- 2015 359 615
- US-A1- 2016 135 931

## Description

La présente invention concerne le domaine de la restauration prothétique dentaire, et concerne plus particulièrement la fabrication d'un ensemble comprenant un maître-modèle fabriqué par une technologie additive telle qu'une impression 3D (encore appelée « impression tridimensionnelle »).

Le maître-modèle est une représentation d'au moins une partie de la cavité buccale du patient à restaurer par la prothèse à fabriquer. Le prothésiste l'utilise pour préparer une prothèse exactement dimensionnée pour se conformer à la dentition du patient.

Les maître-modèles sont fabriqués à partir d'un relevé de la géométrie intra-buccale d'un patient. Traditionnellement, les maître-modèles ont été fabriqués en plâtre à partir d'empreintes de la dentition du patient, réalisées au moyen d'une pâte dentaire disposée dans des porte-empreintes généralement en forme de U. Lorsqu'il s'agit d'une restauration de dentition au moyen d'un ou plusieurs implants dentaires, le maître-modèle comporte un ou plusieurs analogues d'implants positionnés et orientés de façon à reproduire avec exactitude la position du ou des implants dans la bouche du patient. Les ébauches d'éléments prothétiques dentaires sont chacune fixées au maître-modèle par une vis de fixation à filetage externe venant se visser dans un alésage taraudé de l'analogue d'implant.

Le procédé de scannage intra-oral tridimensionnel permet aujourd'hui d'effectuer un relevé de la géométrie intra-buccale du patient en s'affranchissant de la prise d'empreintes au moyen de porte-empreintes, dont la précision dépendait fortement de la dextérité du dentiste procédant à la prise d'empreinte. Le scannage intra-oral tridimensionnel procure une modélisation informatique tridimensionnelle de la dentition du patient, modélisation que le prothésiste va ensuite utiliser pour concevoir la prothèse.

La modélisation informatique tridimensionnelle de la dentition du patient est ensuite utilisée pour fabriquer le maître-modèle par un procédé de fabrication par addition de matière (technologie additive telle qu'une impression 3D). Une imprimante 3D « imprime » le maître-modèle par empilage d'une succession de fines couches de matière (strates).

Dans ce cadre, il est ménagé des cavités destinées à recevoir de façon précise et indexée les analogues d'implant rapportés, comme décrit dans les documents US 2011/029093 A1, US 2015/0374466 A1, US 2016/0135931 A1, WO 2014/139498 A1 et WO 2014/161552 A2.

Il se pose le problème d'imprimer avec une précision suffisante les cavités destinées à recevoir les analogues d'implant rapportés, lesquels ont des formes extérieures spécifiques (non-standardisées) propres à chaque marque d'implants utilisée par les chirurgiens-dentistes. Il faut également que le prothésiste dispose d'un stock suffisant d'analogues d'implant de différentes marques, puis engage correctement les analogues d'implant dans leurs cavités respectives. L'ajout d'analogues d'implant augmente en outre très fortement le coût de fabrication du maître-modèle.

Enfin, des implants adjacents peuvent devoir être disposés en bouche du patient à proximité immédiate les uns des autres et avec des angulations entre eux qui rendent impossible leur reproduction au moyen d'analogues d'implant dans un maître-modèle.

Dans le document US 2013/0216980 A1, il est décrit un maître-modèle fabriqué par technologie additive telle qu'une impression 3D. Là encore, une cavité est ménagée pour recevoir un analogue d'implant de façon précise et indexée. Pour plus de fiabilité, l'analogue d'implant peut être fixé au maître-modèle au moyen d'une vis de fixation venant en prise dans un trou ménagé dans le maître-modèle (figure 32). On ignore toutefois complètement la méthode de réalisation dans le maître-modèle dudit trou destiné à recevoir ladite vis de fixation. En particulier, celui-ci peut tout à fait être réalisé par un procédé de fabrication par retrait de matière (notamment perçage) après que le maître-modèle ait été fabriqué par technologie additive. Par ailleurs, on ignore si ledit trou est muni d'un filetage interne, ou s'il s'agit d'un trou cylindrique lisse dans lequel la vis de fixation vient s'insérer en force et/ou créer un filetage interne lors de son vissage.

Le document US 2015/0359615 A1 décrit un maître-modèle selon le préambule de la revendication 1. Dans ce document, le maître-modèle comporte un trou dont la paroi intérieure peut être filetée. On ignore toutefois complètement la méthode de réalisation du filetage interne dudit trou. En particulier, celui-ci peut tout à fait être réalisé lors d'une opération de reprise par taraudage au moyen d'un taraud ou d'une vis auto-taraudante après que le maître-modèle ait été fabriqué par technologie additive avec un trou lisse.

Un problème proposé par la présente invention est de fabriquer un maître-modèle par une technologie additive au moyen d'une disposition de matière en strates successives, telle qu'une impression 3D, à un coût réduit tout en réduisant les risques d'imprécision.

Un autre problème proposé par l'invention est de procurer une tenue fiable de la prothèse sur le maître-modèle lors de l'élaboration de la prothèse par le prothésiste.

Pour atteindre ces objets ainsi que d'autres, l'invention propose un ensemble selon la revendication 1 pour la préparation d'une prothèse dentaire. L'utilisation de l'ensemble selon la revendication 1 pour la fabrication, l'ajustement ou le contrôle d'un élément prothétique dentaire par un prothésiste est réalisée selon la revendication 18.

Le maître-modèle est fabriqué à partir d'un relevé de la géométrie buccale d'un patient ayant au moins un implant dentaire comportant une surface de référence. La surface de référence du maître modèle correspond à la surface de référence dudit implant dentaire, et pourra donc recevoir par appui direct l'élément prothétique dentaire.

Le maître-modèle est dépourvu d'analogue d'implant, dès lors que le filetage destiné à recevoir la vis de fixation est directement imprimé lors de la fabrication du maître-modèle. Les surfaces de référence pour la réception (par contact direct) de l'élément prothétique dentaire (telle qu'une prothèse, de type armature de prothèse plurale transfixée par exemple, ou telle qu'un pilier dentaire) sont également directement réalisées par impression 3D. Le coût du maître-modèle est ainsi fortement réduit, et il n'y a plus de risques de conflits entre des analogues d'implant adjacents.

Lors de la fabrication, l'ajustement ou le contrôle d'un élément prothétique dentaire par un prothésiste, ce dernier :
- rapporte ledit élément prothétique dentaire directement en appui sur la surface de référence du maître-modèle,
- fixe ledit élément prothétique dentaire au maître-modèle en engageant par vissage la vis de fixation dans l'élément prothétique dentaire et dans la cavité filetée du maître-modèle.

Les paramètres de pas et de hauteur de filet du filetage de la vis de fixation donnent au filet des dimensions suffisantes, relativement à l'épaisseur des strates, pour que le filetage interne de la cavité filetée reçoive de façon fiable et précise la vis de fixation et en assure une retenue satisfaisante.

Avantageusement, le profil du filetage de la vis de fixation (provisoire) dans le maître-modèle peut être différent du profil de filetage de la cavité filetée de l'implant en bouche du patient, de sorte que cette vis de fixation ne peut pas être ensuite engagée et/ou retenue par vissage dans la cavité filetée de l'implant en bouche du patient. Cela empêche le chirurgien-dentiste de réutiliser la vis de fixation (provisoire) de la prothèse (ou élément prothétique dentaire) sur le maître-modèle comme vis de fixation définitive pour fixer ensuite la prothèse sur l'implant en bouche du patient. On réduit ainsi le risque d'une défaillance de la fixation de la prothèse en bouche. La vis de fixation de la prothèse sur le maître-modèle peut alors être fabriquée en un matériau non biocompatible, afin de réduire les coûts, et est utilisée exclusivement pour la fixation de l'élément prothétique dentaire sur le maître-modèle, tandis qu'une vis différente sera utilisée pour fixer l'élément prothétique dentaire sur l'implant dentaire en bouche du patient.

De préférence, le filetage externe de la vis de fixation peut avoir un profil qui n'est pas métrique. Un profil métrique obligerait, pour respecter les paramètres fixés par la présente invention, à utiliser des strates d'épaisseur trop réduite. Cela allongerait fortement le temps d'impression 3D et donc le coût d'obtention du maître-modèle. En outre, la cavité filetée de l'implant en bouche du patient est généralement pourvue d'un filetage à profil métrique. Ainsi, un filetage externe de vis de fixation qui n'est pas métrique empêche une réutilisation dans la plupart des implants en bouche pour la fixation définitive de la prothèse.

De préférence, le filetage externe de la vis de fixation peut avoir un profil trapézoïdal. Les filets sont ainsi dépourvus d'arête tranchante à leur sommet, ce qui limite les risques de dégradation du filetage interne de la cavité filetée dans laquelle la vis de fixation est insérée plusieurs fois lors de la fabrication de la prothèse.

Avantageusement, la vis de fixation et la cavité filetée peuvent être conformées de façon que, lors de la fixation d'un élément prothétique dentaire sur le maître-modèle, la vis de fixation est en prise dans le filetage interne selon au moins quatre pas.

Un engagement selon quatre pas s'est avéré suffisant pour limiter les risques de dégradation du filetage interne de la cavité filetée lors du serrage de la vis de fixation. On évite ainsi que la matière constitutive du filetage interne de la cavité filetée (un plastique généralement) soit déformée plastiquement ou même arrachée accidentellement.

Avantageusement, on peut prévoir que :
- l'ensemble est destiné à être associé à un élément prothétique dentaire sous forme d'une armature de prothèse plurale transfixée,
- la cavité filetée est ménagée dans une excroissance à tronçon distal destiné à s'engager au moins en partie dans un logement creux correspondant ménagé dans ladite armature de prothèse plurale transfixée.

Une armature de prothèse plurale transfixée est généralement utilisée pour restaurer partiellement ou en totalité une arcade dentaire. Elle est généralement portée dans la bouche du patient par plusieurs implants s'allongeant selon des directions non parallèles entre elles (obliques). Les excroissances à tronçon distal destiné à s'engager au moins en partie dans des logements creux correspondants ménagés dans ladite armature de prothèse plurale transfixée permettent un positionnement précis de l'armature de prothèse plurale sur le maître-modèle.

En alternative, on peut prévoir que :
- l'ensemble est destiné à être associé à un élément prothétique dentaire sous forme d'une armature de prothèse plurale transfixée,
- la cavité filetée est ménagée dans le prolongement d'un logement creux, ledit logement creux étant destiné à recevoir au moins en partie le tronçon distal d'une excroissance correspondante portée par ladite armature de prothèse plurale transfixée.

Les logements creux destinés recevoir au moins en partie le tronçon distal d'excroissances correspondantes portées par ladite armature de prothèse plurale transfixée permettent un positionnement précis de l'armature de prothèse plurale sur le maître-modèle.

De préférence, on peut prévoir que :
- le tronçon distal de l'excroissance est muni sur sa surface extérieure d'une dépouille latérale, et/ou
- le logement creux est muni sur sa surface intérieure d'une dépouille latérale.

Chaque excroissance à tronçon distal muni sur sa surface extérieure d'une dépouille latérale (par exemple au moyen d'une forme extérieure tronconique) coopère avec le logement creux correspondant (éventuellement muni sur sa surface intérieure d'une dépouille latérale, par exemple au moyen d'une forme intérieure tronconique) de l'armature de prothèse plurale transfixée pour procéder à un centrage progressif et précis de l'armature de prothèse sur chacune des excroissances. La dépouille latérale extérieure des excroissances permet de faciliter l'engagement de l'armature de prothèse plurale transfixée sur les excroissances, particulièrement lorsque les excroissances se développent selon des directions axiales respectives qui sont obliques entre elles.

Avantageusement, on peut prévoir que :
- l'ensemble comprend en outre une fausse gencive destinée à être rapportée sur le maître-modèle,
- l'un du maître-modèle et de la fausse gencive comporte une excroissance munie d'un tronçon destiné à s'engager au moins en partie dans un logement creux correspondant ménagé dans l'autre du maître-modèle et de la fausse gencive.

La fausse gencive permet au prothésiste de s'assurer de l'esthétisme de la restauration prothétique qu'il prépare, en vérifiant notamment que la zone de jonction entre la prothèse et l'implant sera bien cachée par la gencive.

De préférence, on prévoit que :
- le tronçon de l'excroissance est muni sur sa surface extérieure d'une dépouille latérale, et/ou
- le logement creux est muni sur sa surface intérieure d'une dépouille latérale.

Là encore, chaque tronçon d'excroissance muni sur sa surface extérieure d'une dépouille latérale (par exemple au moyen d'une forme extérieure tronconique) coopère avec le logement creux correspondant (éventuellement muni sur sa surface intérieure d'une dépouille latérale, par exemple au moyen d'une forme intérieure tronconique) de la fausse gencive pour procéder à un centrage progressif et précis de la fausse gencive sur chacune des excroissances. La dépouille latérale extérieure des excroissances permet de faciliter l'engagement de la fausse gencive sur les excroissances, particulièrement lorsque les excroissances se développent selon des directions axiales respectives qui sont obliques entre elles.

De préférence, on peut prévoir que :
- l'ensemble est destiné à être associé à un élément prothétique dentaire sous forme d'un pilier de prothèse dentaire unitaire,
- une empreinte creuse de connexion destinée à recevoir ledit pilier de prothèse dentaire unitaire est ménagée à l'embouchure de la cavité filetée.

Le maître-modèle comporte ainsi une connectique adaptée pour une réception précise du pilier de prothèse dentaire unitaire, cette connectique étant directement imprimée lors de la fabrication du maître-modèle. Ladite empreinte creuse de connexion peut comporter une section transversale non circulaire, le pilier pouvant ainsi être indexé en rotation par rapport au maître-modèle.

En alternative, on peut prévoir que :
- l'ensemble est destiné à être associé à un élément prothétique dentaire sous forme d'un pilier de prothèse dentaire unitaire,
- la cavité filetée est ménagée dans une excroissance à tronçon distal destiné à s'engager au moins en partie dans un logement creux correspondant ménagé dans ledit pilier de prothèse dentaire unitaire.

Là encore, pour un centrage progressif et précis du pilier de prothèse dentaire unitaire sur l'excroissance, on peut de préférence prévoir que :
- le tronçon distal de l'excroissance est muni sur sa surface extérieure d'une dépouille latérale, et/ou
- le logement creux est muni sur sa surface intérieure d'une dépouille latérale.

De préférence, on peut prévoir que :
- l'ensemble comprend en outre une fausse gencive destinée à être rapportée sur le maître-modèle,
- l'un du maître-modèle et de la fausse gencive comporte une protubérance, destinée à s'engager au moins en partie dans un logement creux correspondant ménagé dans l'autre du maître-modèle et de la fausse gencive.

La fausse gencive permet au prothésiste de s'assurer de l'esthétisme de la restauration prothétique qu'il prépare, en vérifiant notamment que la zone de jonction entre la prothèse (ou le pilier de la prothèse) et l'implant sera bien cachée par la gencive.

Avantageusement, on peut prévoir que :
- la protubérance est munie sur sa surface extérieure d'une dépouille latérale, et/ou
- le logement creux est muni sur sa surface intérieure d'une dépouille latérale.

Là encore, chaque protubérance munie sur sa surface extérieure d'une dépouille latérale (par exemple au moyen d'une forme extérieure tronconique) coopère avec le logement creux correspondant (éventuellement muni sur sa surface intérieure d'une dépouille latérale, par exemple au moyen d'une forme intérieure tronconique) de la fausse gencive pour procéder à un centrage progressif et précis de la fausse gencive sur la protubérance.

Selon un autre aspect de l'invention, il est proposé un procédé de fabrication d'un maître-modèle pour la confection d'une prothèse dentaire à partir d'un fichier informatique de modélisation informatique tridimensionnelle de la dentition à restaurer du patient issu d'un scannage intra-oral de la cavité buccale du patient ;, ce procédé étant réalisé selon la revendication 17. Ledit procédé comporte une étape lors de laquelle on inclut, dans la modélisation informatique tridimensionnelle, au moins une surface de référence destinée à être réalisée lors de la fabrication du maître-modèle par technologie additive et correspondant à une surface de référence d'un implant dentaire en bouche du patient.

D'autres objets, caractéristiques et avantages de la présente invention ressortiront de la description suivante de modes de réalisation particuliers, faite en relation avec les figures jointes, parmi lesquelles :
- la figure 1 est une vue en perspective éclatée d'un ensemble selon un premier mode de réalisation de la présente invention, avec un maître-modèle associé à un élément prothétique dentaire sous forme d'une armature de prothèse plurale transfixée et à une fausse gencive ;
- la figure 2 est une vue en coupe du maître-modèle de la figure 1 ;
- la figure 3 est une vue en perspective éclatée de l'ensemble de la figure 1 avec la fausse gencive positionnée sur le maître-modèle ;
- la figure 4 est une vue en coupe du maître-modèle de la figure 3 ;
- la figure 5 est une vue en perspective de l'ensemble de la figure 1 assemblé ;
- la figure 6 est une vue en coupe du maître-modèle de la figure 5 ;
- la figure 7 est une vue en perspective de la vis de fixation de l'ensemble de la figure 1 ;
- la figure 8 est une vue de côté en coupe partielle de la vis de la figure 7 ;
- la figure 9 est une vue de côté de la vis de la figure 7, en prise dans le maître-modèle ;
- la figure 10 est une vue en perspective éclatée d'un ensemble selon un deuxième mode de réalisation de la présente invention, avec un maître-modèle associé à un élément prothétique dentaire sous forme d'un pilier de prothèse unitaire et à une fausse gencive ;
- la figure 11 est une vue de détail en perspective du maître-modèle de la figure 10 ;
- la figure 12 est une vue en perspective éclatée de l'ensemble de la figure 10 avec la fausse gencive positionnée sur le maître-modèle ;
- la figure 13 est une vue en coupe du maître-modèle de la figure 12 ;
- la figure 14 est une vue en perspective de l'ensemble de la figure 10 assemblé ;
- la figure 15 est une vue en coupe du maître-modèle de la figure 14 ;
- la figure 16 est une vue en perspective de la vis de fixation de l'ensemble de la figure 10 ;
- la figure 17 est une vue de côté en coupe partielle de la vis de la figure 16 ; et
- les figures 18 à 20 sont des vues de côté de plusieurs exemples d'excroissance ou de protubérance.

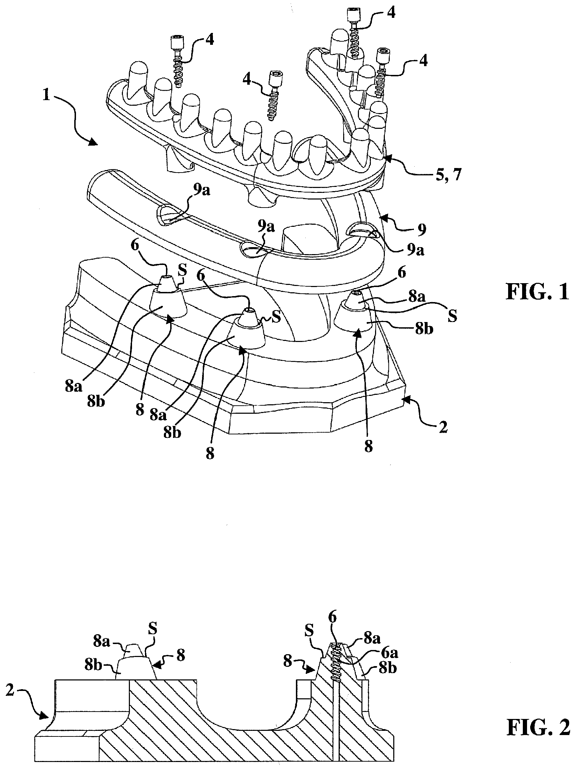

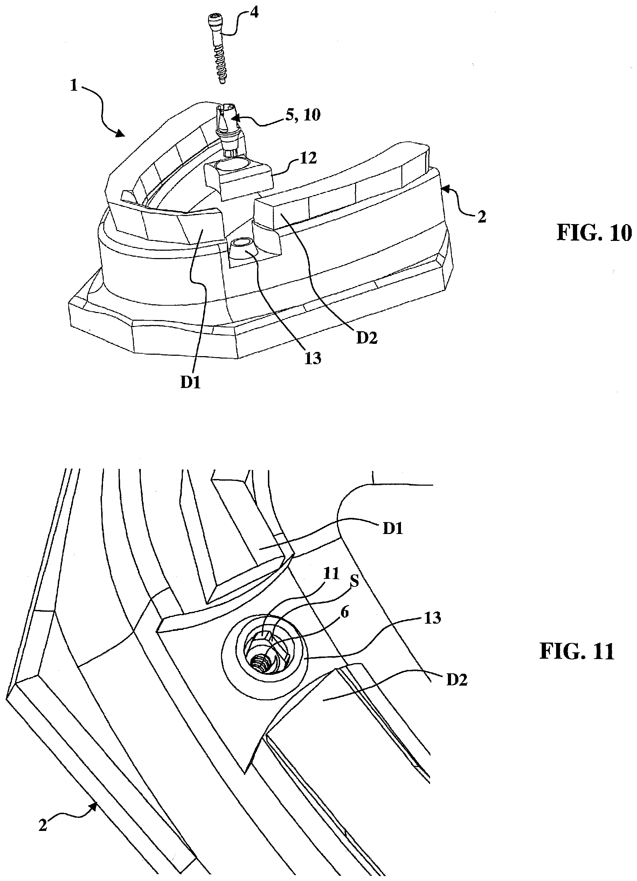

Sur les figures 1 à 18 sont illustrés deux modes de réalisation particuliers d'ensembles 1 selon l'invention. Un premier mode de réalisation est illustré sur les figures 1 à 9 tandis qu'un deuxième mode de réalisation est illustré sur les figures 10 à 17.

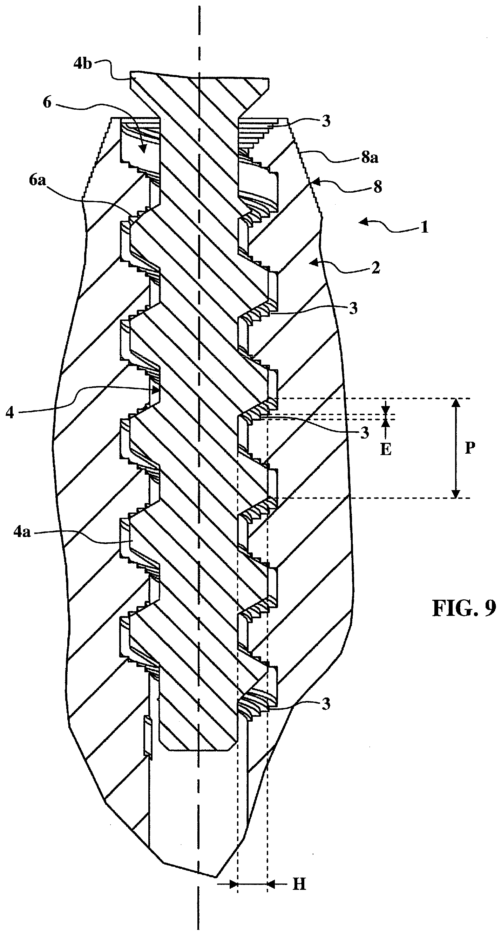

Dans tous ces modes de réalisation, l'ensemble 1 pour la préparation d'une prothèse dentaire comporte un maître-modèle 2 fabriqué par une technologie additive au moyen d'une disposition de matière en strates 3 successives (voir figure 9), telle qu'une impression 3D. Le maître-modèle 2 est fabriqué à partir d'un scannage intra-oral.

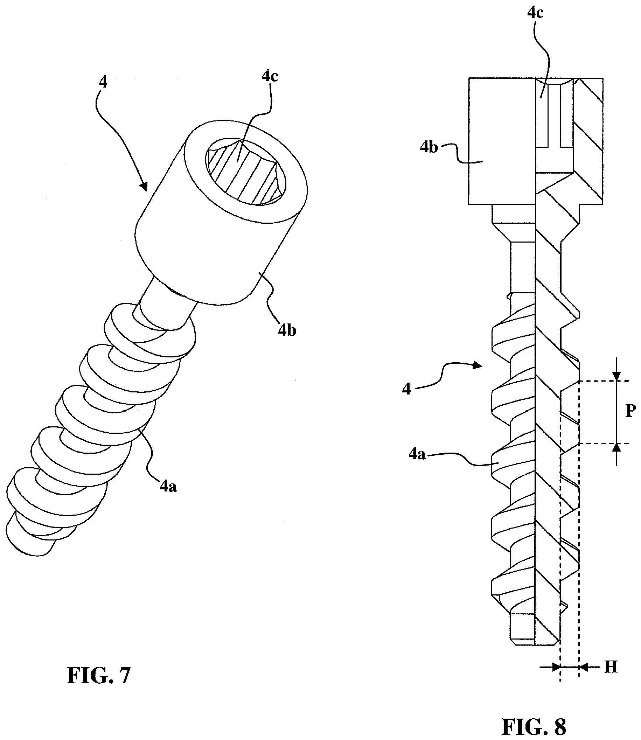

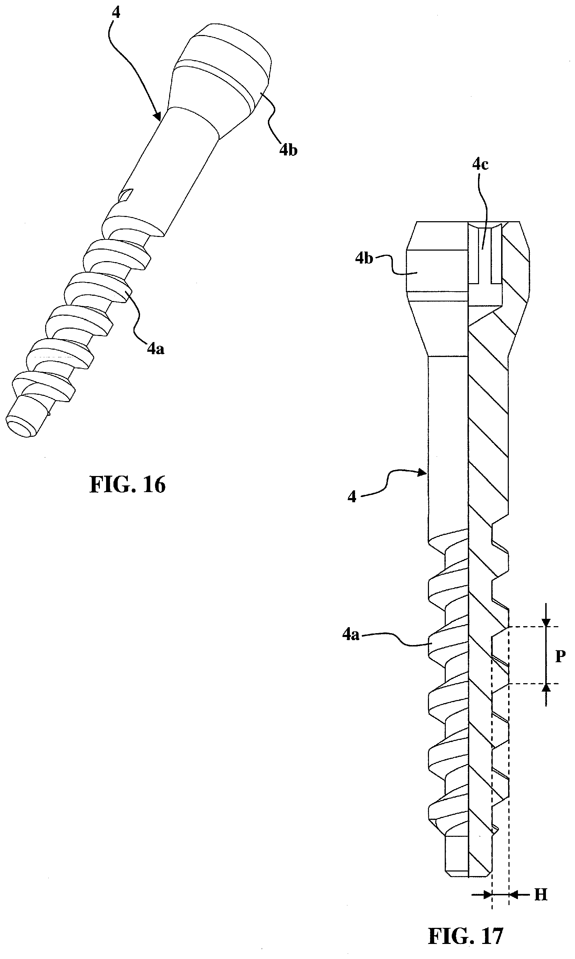

L'ensemble 1 comporte en outre au moins une vis de fixation 4 à filetage externe 4a, destinée à fixer de façon amovible sur le maître-modèle 2 un élément prothétique dentaire 5. Deux vis de fixation 4, propres à chacun des modes de réalisation, sont illustrées sur les figures 7 et 8 d'une part, et sur les figures 16 et 17 d'autre part. Ces vis de fixation 4 sont identiques en ce qui concerne leur filetage externe 4a, et ne diffèrent sensiblement que par la forme de leur tête 4b dans laquelle est ménagée une empreinte creuse 4c hexagonale d'entraînement en rotation.

Le maître-modèle 2 comporte au moins une surface de référence S destinée à recevoir en appui l'élément prothétique dentaire 5, ladite surface de référence S étant réalisée lors de la fabrication du maître-modèle 2 par technologie additive.

Le maître-modèle 2 comporte au moins une cavité filetée 6 dont le filetage interne 6a, destiné à recevoir ladite vis de fixation 4 par vissage, est réalisé lors de la fabrication du maître-modèle 2 par technologie additive (voir figures 1 à 6 et figures 10 à 15).

Comme il est plus particulièrement explicité sur la figure 9, le filetage externe 4a de la vis de fixation 4 comporte :
- un pas P supérieur ou égal à 10 fois l'épaisseur des strates 3,
- une hauteur H de filet supérieure ou égale à 5 fois l'épaisseur E des strates 3.

Toujours sur la figure 9, on constate que le filetage externe 4a de la vis de fixation 4 n'a pas un profil métrique. Le filetage externe 4a de la vis de fixation 4 a un profil trapézoïdal, de sorte que la vis de fixation 4 ne peut ainsi pas être reçue dans les implants dentaires qui ont généralement un filetage interne à profil métrique. La vis de fixation 4 est fabriquée en un matériau métallique peu onéreux, et qui n'a pas besoin d'être biocompatible puisqu'elle n'est pas en mesure d'être reçue par vissage dans un implant dentaire en bouche du patient.

La vis de fixation 4 et la cavité filetée 6 sont conformées de façon que, lors de la fixation d'un élément prothétique dentaire 5 sur le maître-modèle 2, la vis de fixation 4 est en prise dans le filetage interne 6a selon au moins quatre pas, comme illustré sur la figure 9.

Dans le premier mode de réalisation illustré sur les figures 1 à 9, l'ensemble 1 est associé à un élément prothétique dentaire 5 de type armature de prothèse plurale transfixée 7. Cette armature de prothèse plurale transfixée 7 est destinée à être fixée à une pluralité d'implants en bouche du patient (quatre en l'espèce). Il est ainsi prévu plusieurs (quatre) cavités filetées 6 représentatives des implants tels qu'ils sont positionnés dans la bouche du patient.

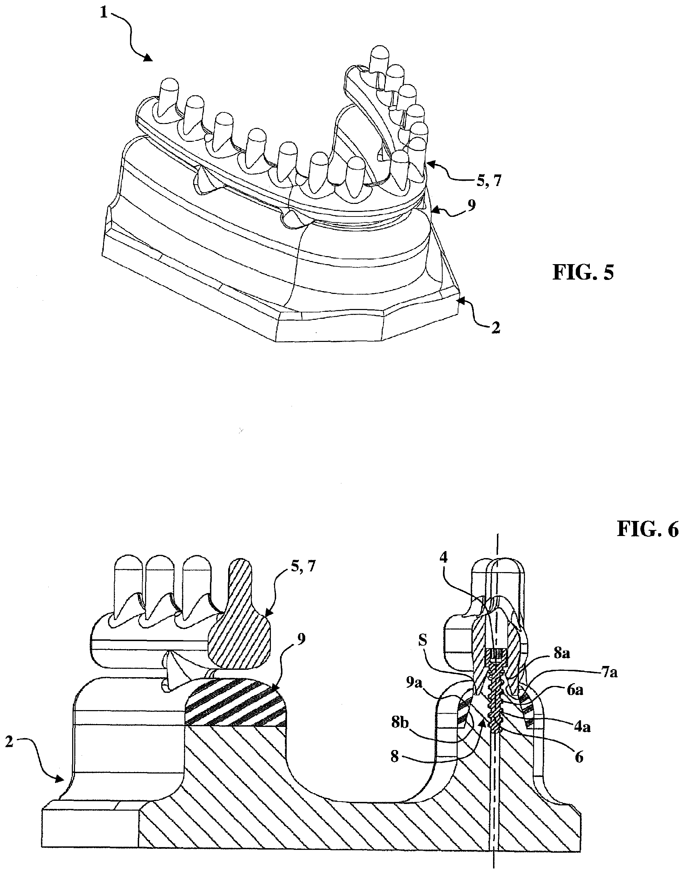

Chaque cavité filetée 6 est ménagée dans une excroissance 8 à tronçon distal 8a de forme extérieure tronconique, ledit tronçon distal 8a étant destiné à s'engager au moins en partie dans un logement tronconique 7a correspondant ménagé dans ladite armature de prothèse plurale transfixée 7, comme il est plus particulièrement visible sur la figure 6.

Comme on le voit mieux sur les figures 1 à 4, les excroissances 8 situées en partie postérieure du maître-modèle 2 se développent selon des directions axiales respectives qui sont obliques par rapport aux directions axiales respectives selon lesquelles se développent les excroissances 8 situées en partie antérieure du maître-modèle 2. Cette disposition oblique résulte des orientations des cavités filetées 6 qui sont elles-mêmes à l'image des orientations des implants en bouche du patient.

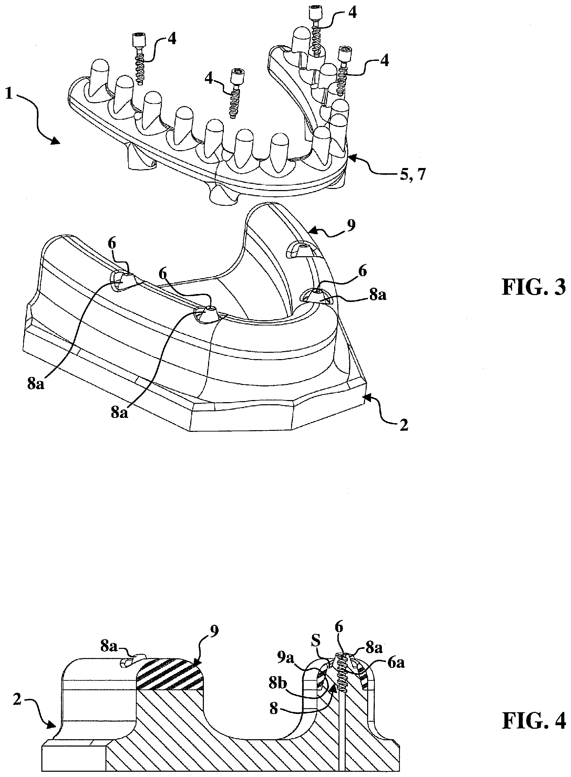

L'ensemble 1 comprend en outre une fausse gencive 9 destinée à être rapportée sur le maître-modèle 2. Chaque excroissance 8 comporte un tronçon proximal 8b de forme extérieure tronconique, destiné à s'engager au moins en partie dans un logement tronconique 9a correspondant ménagé dans ladite fausse gencive 9, comme il est plus particulièrement visible sur les figures 4 et 6.

Entre le tronçon distal 8a et le tronçon proximal 8b de l'excroissance 8, le maître-modèle 2 comprend une surface de référence S se présentant sensiblement sous la forme d'une couronne. Cette surface de référence S correspond avec exactitude (en dimensions, position et orientation) à la surface de référence portée par l'implant en bouche contre laquelle est destinée à venir en appui l'armature de prothèse plurale transfixée 7. Ainsi, lorsque l'armature de prothèse plurale transfixée 7 repose simultanément sur toutes les surfaces de référence S des différentes excroissances 8, elle est positionnée et orientée comme elle le sera en bouche du patient. Le prothésiste peut ainsi concevoir sa prothèse sur l'armature de prothèse plurale transfixée 7 en tenant compte des dents situées à proximité (qui sont ici les dents de l'arcade dentaire antagoniste) pour les zones de contact et points d'occlusion.

On peut à l'inverse prévoir une excroissance 8 sur l'armature de prothèse plurale transfixée 7, destinée à être au moins en partie reçue dans un logement creux ménagé dans le maître-modèle (à l'embouchure de la cavité filetée 6).

Dans le deuxième mode de réalisation illustré sur les figures 10 à 17, l'ensemble 1 est associé à un élément prothétique dentaire 5 de type pilier 10 de prothèse dentaire unitaire.

Pour recevoir et tenir le pilier 10 sur le maître-modèle 2 précisément dans la même position qu'il occupera en bouche du patient, une empreinte creuse de connexion 11 est ménagée à l'embouchure de la cavité filetée 6.

L'empreinte creuse de connexion 11 comporte une surface de référence S qui correspond avec exactitude (en dimensions, position et orientation) à la surface de référence de l'empreinte creuse de l'implant en bouche dans laquelle est destiné à être reçu le pilier 10. Ainsi, lorsque le pilier 10 est engagé dans l'empreinte creuse de connexion 11, il est positionné et orienté comme il le sera en bouche du patient. Le prothésiste peut ainsi concevoir sa prothèse en l'emmanchant sur le pilier 10 en tenant compte des dents situées à proximité (qui sont ici les dents adjacentes D1 et D2 non prothétiques et les dents de l'arcade dentaire antagoniste) pour les zones de contact et points d'occlusion.

L'empreinte creuse de connexion 11 comporte une section transversale non circulaire pour indexer en rotation le pilier 10. Ici, la section transversale de l'empreinte creuse de connexion 11 a une forme triangulaire qui est complémentaire de l'extrémité inférieure du pilier 10.

On peut à l'inverse prévoir une cavité filetée 6 ménagée dans une excroissance à tronçon distal destiné à s'engager au moins en partie dans un logement creux correspondant ménagé dans ledit pilier 10 de prothèse dentaire unitaire.

L'ensemble 1 comprend en outre une fausse gencive 12 destinée à être rapportée sur le maître-modèle 2. On observe plus spécifiquement sur les figures 10, 11 et 13 que, à l'embouchure de l'empreinte creuse de connexion 11 est prévue une protubérance tronconique 13, destinée à s'engager au moins en partie dans un logement tronconique 12a correspondant ménagé dans ladite fausse gencive 12.

Là encore, on peut inverser les éléments mâles/femelles portés par la fausse gencive 12 et le maître-modèle 2.

Lors de la fabrication d'un ensemble 1 selon l'invention, il est tout d'abord procédé par le chirurgien-dentiste à un scannage intra-oral de la dentition à restaurer du patient.

Ce scannage intra-oral permet de générer une modélisation informatique tridimensionnelle de la dentition à restaurer du patient.

Le fichier informatique issu du scannage intra-oral est ensuite retravaillé informatiquement pour y inclure des surfaces de référence correspondant à la (aux) surface(s) de référence portée(s) par l'implant (ou par les implants) disposé(s) en bouche du patient.

Il est alors procédé à une fabrication assistée par ordinateur du maître-modèle 2, par une technologie additive au moyen d'une disposition de matière en strates successives, telle qu'une impression 3D.

Lors de cette fabrication, une imprimante 3D imprime le maître-modèle 2 par empilage d'une succession de fines couches de matière (ou strates) 3 d'épaisseur E.

En particulier, la ou les cavité(s) filetée(s) 6 avec son(leur) filetage interne 6a est (sont) réalisée(s) lors de la fabrication du maître-modèle 2 par technologie additive. L'épaisseur E des strates 3 est choisie de façon à permettre une impression dans un temps de fabrication relativement court, tout en procurant une tenue fiable de la prothèse sur le maître-modèle 2 lors de l'élaboration de la prothèse par le prothésiste. Les paramètres (pas P et hauteur H) du filetage externe 4a de la vis de fixation 4 sont prévus en conséquence, à savoir que :
- le pas P est supérieur ou égal à 10 fois l'épaisseur E des strates 3,
- la hauteur H de filet est supérieure ou égale à 5 fois l'épaisseur E des strates 3.

La (les) surface(s) de référence S de l'empreinte (des empreintes) creuse(s) de connexion 11, ou le cas échéant de la (des) excroissance(s) 8 ou protubérance(s) 13, est (sont) également réalisée(s) par l'impression 3D.

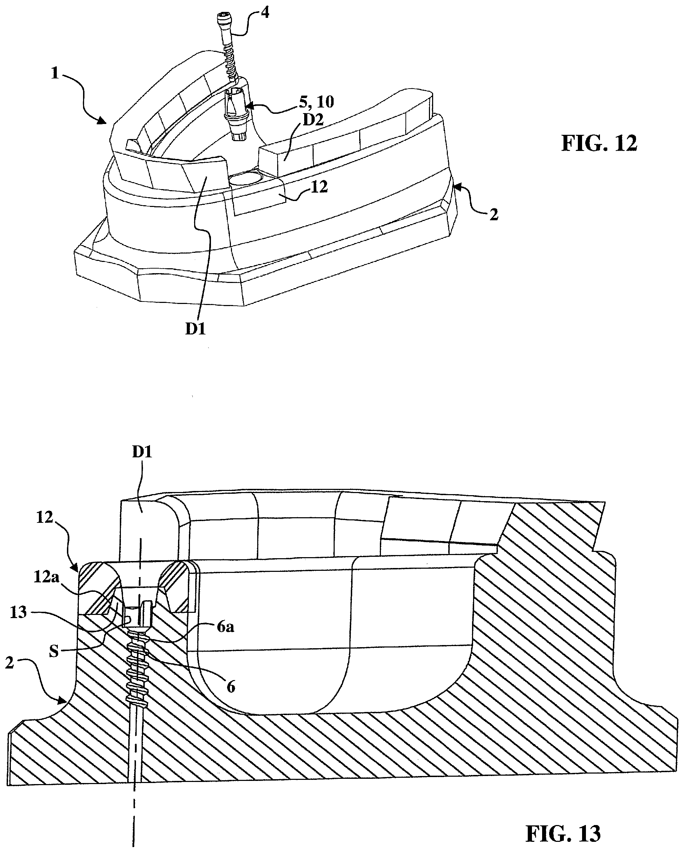

Après avoir obtenu le maître-modèle 2, le prothésiste peut engager la fausse gencive 9 (figures 3 et 4) ou 12 (figures 12 et 13) sur les excroissances 8 ou protubérance(s) 13. Les fausses gencives 9 ou 12 s'engagent selon leur(s) logement(s) tronconique(s) 9a ou 12a sur les tronçons proximaux 8b ou protubérance(s) 13 du maître-modèle 2.

Dans le cas du premier mode de réalisation, le prothésiste pose alors l'armature de prothèse plurale transfixée 7 sur les surfaces de référence S vers lesquelles est progressivement guidée l'armature de prothèse plurale transfixée 7 au moyen des tronçons distaux 8a tronconiques. Puis le prothésiste insère les vis de fixation 4 dans les cavités filetées 6 et les visse pour fixer l'armature de prothèse plurale transfixée 7 sur le maître-modèle 2 (figures 5 et 6).

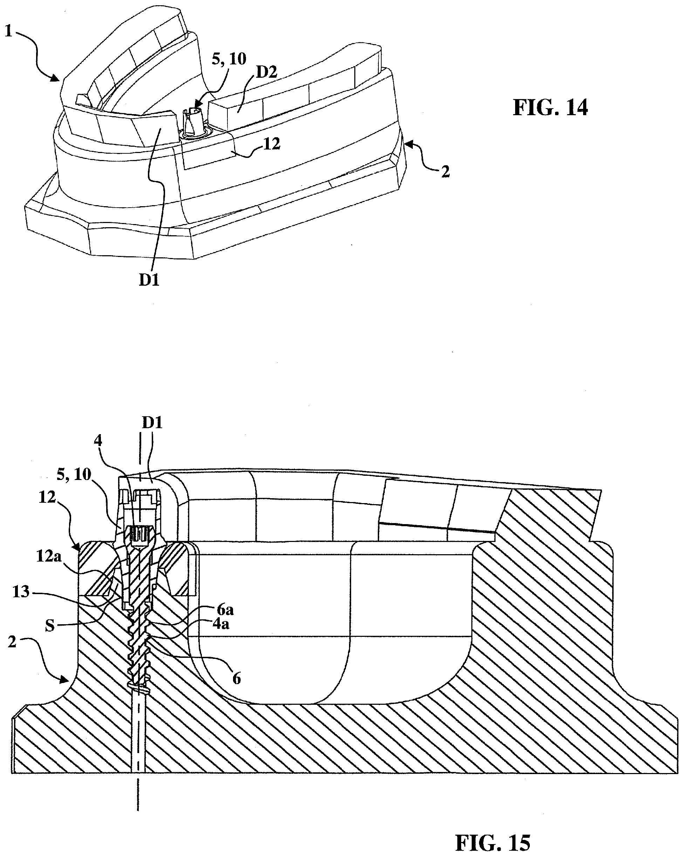

Dans le cas du deuxième mode de réalisation, le prothésiste insère alors le pilier 10 dans l'empreinte creuse de connexion 11. Puis le prothésiste insère la vis de fixation 4 dans la cavité filetée 6 et la visse pour fixer le pilier 10 sur le maître-modèle 2 (figures 14 et 15).

En fin de vissage, les vis de fixation 4 sont en prise dans le filetage interne 6a selon au moins quatre pas P.

Le prothésiste peut ensuite procéder à la fabrication, l'ajustement ou le contrôle de son élément prothétique dentaire (par exemple une prothèse plurale transfixée 7 dans le cas du premier mode de réalisation, ou une prothèse unitaire transfixée à pilier dentaire 10 dans le cas du deuxième mode de réalisation) de la même façon qu'avec les maître-modèles « classiques » en plâtre.

Après la fabrication, l'ajustement ou le contrôle de l'élément prothétique dentaire 7 ou 10, ce dernier sera rapporté et fixé sur l'implant dentaire en bouche du patient à l'aide d'une autre vis (qu'on peut appeler vis de fixation définitive). En effet, le profil du filetage externe 4a de la vis de fixation 4 est différent du profil de filetage interne de l'implant en bouche du patient, de sorte que cette vis de fixation 4 ne peut pas être ensuite engagée et/ou retenue par vissage dans la cavité filetée de l'implant en bouche du patient.

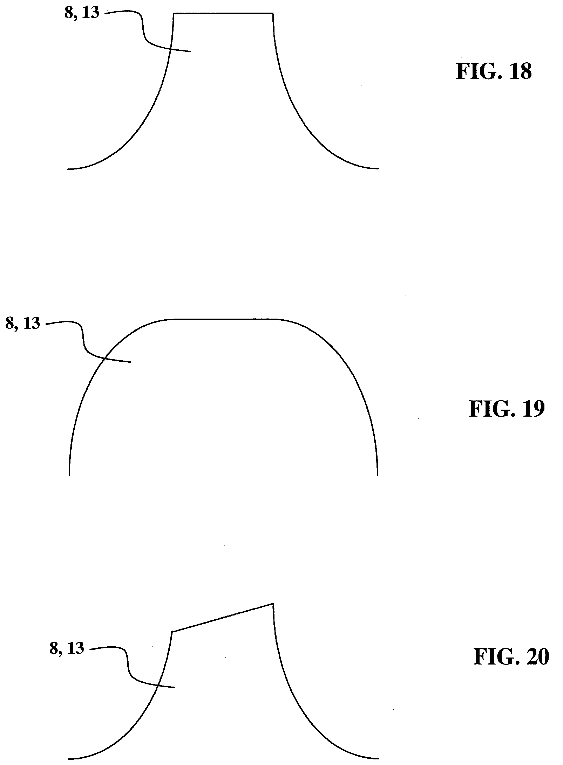

Dans les modes de réalisation illustrés sur les figures 1 à 17, les excroissances 8, les protubérances 13 et les logements 7a, 9a, 12a creux sont tronconiques. Les excroissances 8 et les protubérances 13 peuvent néanmoins présenter des formes extérieures différentes, également munies d'une dépouille latérale procurant une diminution progressive de leur section transversale, comme il est illustré sur les figures 18 à 20 qui sont des vues de côté d'excroissances 8 ou de protubérances 13. Les logements 7a, 9a, 12a creux peuvent également avoir des formes intérieures autres que tronconiques, par exemple complémentaires des formes illustrées sur les figures 18 à 20.

Il est expressément indiqué qu'une protection indépendante par brevet pourra être recherchée pour un maître-modèle 2 fabriqué par une technologie additive, telle qu'une impression 3D, ledit maître-modèle 2 comportant au moins une surface de référence S destinée à recevoir en appui (direct) un élément prothétique dentaire (armature de prothèse plurale transfixée 7, pilier 10 de prothèse dentaire unitaire, etc.) ladite surface de référence S étant réalisée lors de la fabrication du maître-modèle 2 par technologie additive et correspondant à une surface de référence d'un implant dentaire disposé en bouche du patient. Cette protection pourra être recherchée indépendamment de la présence et des paramètres de vis de fixation 4 et de cavité(s) filetée(s) 6. Le problème résolu par cette combinaison de caractéristiques est de fabriquer un maître-modèle par une technologie additive au moyen d'une disposition de matière en strates successives, telle qu'une impression 3D, à un coût réduit tout en réduisant les risques d'imprécision.

Par ailleurs, il doit être noté que la solution permettant de résoudre le problème d'éviter qu'un chirurgien-dentiste réutilise la vis de fixation de la prothèse sur le maître-modèle pour fixer la prothèse sur l'implant en bouche du patient (notamment parce que celle-ci a déjà été vissée/dévissée plusieurs fois et a donc plus de risques de défaillance en bouche) ne dépend pas de la relation énoncée dans la revendication 1 entre les paramètres du filetage externe 4a de la vis de fixation 4 et l'épaisseur E des strates 3. La solution de ce problème spécifique, pour laquelle une protection indépendante par brevet pourra être recherchée, est un ensemble 1 pour la préparation d'une prothèse dentaire, comportant :
- un maître-modèle 2 fabriqué par une technologie additive au moyen d'une disposition de matière en strates 3 successives, telle qu'une impression 3D,
- une vis de fixation 4 à filetage externe 4a, destinée à fixer de façon amovible sur le maître-modèle 2 un élément prothétique dentaire 5, 7, 10,
dans lequel :
- le maître-modèle 2 comporte au moins une surface de référence S destinée à recevoir en appui (direct) l'élément prothétique dentaire 5, 7, 10, ladite surface de référence S étant réalisée lors de la fabrication du maître-modèle 2 par technologie additive,
- le maître-modèle 2 comporte au moins une cavité filetée 6 dont le filetage interne 6a, destiné à recevoir ladite vis de fixation 4 par vissage, est réalisé lors de la fabrication du maître-modèle 2 par technologie additive,
- le profil du filetage externe 4a de la vis de fixation 4 est différent du profil de filetage interne de la cavité filetée de l'implant en bouche du patient, de sorte que la vis de fixation 4 ne peut pas être engagée et/ou retenue par vissage dans la cavité filetée de l'implant en bouche du patient.

La présente invention n'est pas limitée aux modes de réalisation qui ont été explicitement décrits, mais elle en inclut les diverses variantes et généralisations contenues dans le domaine des revendications ci-après.

## Revendications

1. Ensemble (1) pour la préparation d'une prothèse dentaire, ledit ensemble comportant :
- un maître-modèle (2) fabriqué par une technologie additive au moyen d'une disposition de matière en strates (3) successives, telle qu'une impression 3D, le maître-modèle (2) comportant au moins une surface de référence (S) destinée à recevoir en appui l'élément prothétique dentaire (5, 7, 10), ladite surface de référence (S) étant réalisée lors de la fabrication du maître-modèle (2) par technologie additive,
- une vis de fixation (4) à filetage externe (4a), destinée à fixer de façon amovible sur le maître-modèle (2) un élément prothétique dentaire (5, 7, 10),
**caractérisé en ce que** :
- le maître-modèle (2) comporte au moins une cavité filetée (6) dont le filetage interne (6a), destiné à recevoir ladite vis de fixation (4) par vissage, est réalisé lors de la fabrication du maître-modèle (2) par technologie additive,
- le filetage externe (4a) de la vis de fixation (4) comporte :
• un pas (P) supérieur ou égal à 10 fois l'épaisseur (E) des strates (3),
• une hauteur (H) de filet supérieure ou égale à 5 fois l'épaisseur (E) des strates (3).

2. Ensemble (1) selon la revendication 1, **caractérisé en ce que** le filetage externe (4a) de la vis de fixation (4) n'a pas un profil métrique.

3. Ensemble (1) selon l'une des revendications 1 ou 2, **caractérisé en ce que** le filetage externe (4a) de la vis de fixation (4) a un profil trapézoïdal.

4. Ensemble (1) selon l'une quelconque des revendications 1 à 3, **caractérisé en ce que** la vis de fixation (4) et la cavité filetée (6) sont conformées de façon que, lors de la fixation d'un élément prothétique dentaire (5, 7, 10) sur le maître-modèle (2), la vis de fixation (4) est en prise dans le filetage interne (6a) selon au moins quatre pas (P).

5. Ensemble (1) selon l'une quelconque des revendications 1 à 4, **caractérisé en ce que** :
- l'ensemble (1) est destiné à être associé à un élément prothétique dentaire (5) sous forme d'une armature de prothèse plurale transfixée (7),
- la cavité filetée (6) est ménagée dans une excroissance (8) à tronçon distal (8a) destiné à s'engager au moins en partie dans un logement (7a) creux correspondant ménagé dans ladite armature de prothèse plurale transfixée (7).

6. Ensemble (1) selon l'une quelconque des revendications 1 à 4, **caractérisé en ce que** :
- l'ensemble (1) est destiné à être associé à un élément prothétique dentaire (5) sous forme d'une armature de prothèse plurale transfixée (7),
- la cavité filetée (6) est ménagée dans le prolongement d'un logement creux, ledit logement creux étant destiné à recevoir au moins en partie le tronçon distal d'une excroissance correspondante portée par ladite armature de prothèse plurale transfixée (7).

7. Ensemble (1) selon l'une des revendications 5 ou 6, **caractérisé en ce que** :
- le tronçon distal (8a) de l'excroissance (8) est muni sur sa surface extérieure d'une dépouille latérale, et/ou
- le logement (7a) creux est muni sur sa surface intérieure d'une dépouille latérale.

8. Ensemble (1) selon l'une quelconque des revendications 5 à 7, **caractérisé en ce que** :
- il comprend en outre une fausse gencive (9) destinée à être rapportée sur le maître-modèle (2),
- l'un du maître-modèle (2) et de la fausse gencive (9) comporte une excroissance (8) munie d'un tronçon (8b) destiné à s'engager au moins en partie dans un logement (9a) creux correspondant ménagé dans l'autre du maître-modèle (2) et de la fausse gencive (9).

9. Ensemble selon la revendication 8, **caractérisé en ce que** :
- le tronçon (8b) de l'excroissance (8) est muni sur sa surface extérieure d'une dépouille latérale, et/ou
- le logement (9a) creux est muni sur sa surface intérieure d'une dépouille latérale.

10. Ensemble (1) selon l'une quelconque des revendications 1 à 4, **caractérisé en ce que** :
- l'ensemble (1) est destiné à être associé à un élément prothétique dentaire (5) sous forme d'un pilier (10) de prothèse dentaire unitaire,
- une empreinte creuse de connexion (11) destinée à recevoir ledit pilier (10) de prothèse dentaire unitaire est ménagée à l'embouchure de la cavité filetée (6).

11. Ensemble (1) selon la revendication 10, **caractérisé en ce que** l'empreinte creuse de connexion (11) comporte une section transversale non circulaire.

12. Ensemble (1) selon l'une quelconque des revendications 1 à 4, **caractérisé en ce que** :
- l'ensemble (1) est destiné à être associé à un élément prothétique dentaire (5) sous forme d'un pilier (10) de prothèse dentaire unitaire,
- la cavité filetée (6) est ménagée dans une excroissance à tronçon distal destiné à s'engager au moins en partie dans un logement creux correspondant ménagé dans ledit pilier (10) de prothèse dentaire unitaire.

13. Ensemble (1) selon la revendication 12, **caractérisé en ce que** :
- le tronçon distal de l'excroissance est muni sur sa surface extérieure d'une dépouille latérale, et/ou
- le logement creux est muni sur sa surface intérieure d'une dépouille latérale.

14. Ensemble (1) selon l'une quelconque des revendications 11 à 13, **caractérisé en ce que** :
- il comprend en outre une fausse gencive (12) destinée à être rapportée sur le maître-modèle (2),
- l'un du maître-modèle (2) et de la fausse gencive (12) comporte une protubérance (13) destinée à s'engager au moins en partie dans un logement (12a) creux correspondant ménagé dans l'autre du maître-modèle (2) et de la fausse gencive (12).

15. Ensemble (1) selon la revendication 14, **caractérisé en ce que** :
- la protubérance (13) est munie sur sa surface extérieure d'une dépouille latérale, et/ou
- le logement (12a) creux est muni sur sa surface intérieure d'une dépouille latérale.

16. Ensemble (1) selon l'une quelconque des revendications 1 à 15, **caractérisé en ce que** le profil du filetage externe (4a) de la vis de fixation (4) est différent du profil de filetage interne de la cavité filetée de l'implant en bouche du patient, de sorte que cette vis de fixation (4) ne peut pas ensuite être engagée et/ou retenue par vissage dans la cavité filetée de l'implant en bouche du patient.

17. Procédé de fabrication d'un maître-modèle (2) pour la confection d'une prothèse dentaire à partir d'un fichier informatique de modélisation informatique tridimensionnelle de la dentition à restaurer du patient issu d'un scannage intra-oral de la cavité buccale du patient, ledit maître-modèle (2) comportant au moins une cavité filetée (6) à filetage interne (6a) destinée à recevoir une vis de fixation (4) à filetage externe (4a) destinée à fixer de façon amovible sur le maître-modèle (2) un élément prothétique dentaire (5, 7, 10), ledit procédé comportant une étape lors de laquelle on inclut, dans la modélisation informatique tridimensionnelle, au moins une surface de référence (S) destinée à être réalisée lors de la fabrication du maître-modèle (2) par technologie additive et correspondant à une surface de référence d'un implant dentaire en bouche du patient, **caractérisé en ce que**, lors de la fabrication du maître-modèle (2), le filetage interne (6a) est réalisé par technologie additive.

18. Utilisation d'un ensemble (1) selon l'une quelconque des revendications 1 à 16 pour la fabrication, l'ajustement ou le contrôle d'un élément prothétique dentaire (5, 7, 10) par un prothésiste, **caractérisé en ce que** le prothésiste :
- rapporte ledit élément prothétique dentaire (5, 7, 10) directement en appui sur la surface de référence (S) du maître-modèle (2),
- fixe ledit élément prothétique dentaire (5, 7, 10) au maître-modèle (2) en engageant par vissage la vis de fixation (4) dans la cavité filetée (6) du maître-modèle (2).

## Patentansprüche

1. Baugruppe (1) zur Herstellung einer Zahnprothese, wobei die Baugruppe aufweist:
- ein Mastermodell (2), hergestellt durch eine additive Technologie mittels einer Anordnung von Material in aufeinanderfolgenden Schichten (3), wie z.B. mit 3D-Druck, wobei das Mastermodell (2) mindestens eine Referenzfläche (S) aufweist, vorgesehen zum Aufnehmen des Zahnprothesenelements (5, 7, 10), wobei die Referenzfläche (S) während der Herstellung des Mastermodells (2) durch additive Technologie realisiert ist,
- eine Fixierschraube (4) mit einem Außengewinde (4a), vorgesehen zum lösbaren Fixieren eines Zahnprothesenelements (5, 7, 10) am Mastermodell (2),
**dadurch gekennzeichnet, dass**:
- das Mastermodell (2) mindestens einen Gewindehohlraum (6) aufweist, dessen Innengewinde (6a), vorgesehen zum Aufnehmen der besagten Fixierschraube (4) durch Einschrauben, während der Herstellung des Mastermodells (2) durch additive Technologie realisiert ist,
- das Außengewinde (4a) der Fixierschraube (4) aufweist:
o eine Steigung (P) größer oder gleich dem 10-fachen der Dicke (E) der Schichten (3),
o eine Gewindehöhe (H) größer oder gleich dem 5-fachen der Dicke (E) der Schichten (3).

2. Baugruppe (1) nach Anspruch 1, **dadurch gekennzeichnet, dass** das Außengewinde (4a) der Fixierschraube (4) kein metrisches Profil aufweist.

3. Baugruppe (1) nach einem der Ansprüche 1 oder 2, **dadurch gekennzeichnet, dass** das Außengewinde (4a) der Fixierschraube (4) ein trapezförmiges Profil aufweist.

4. Baugruppe (1) nach einem der Ansprüche 1 bis 3, **dadurch gekennzeichnet, dass** die Fixierschraube (4) und der Gewindehohlraum (6) derart angepasst sind, dass bei Fixierung eines Zahnprothesenelements (5, 7,10) an dem Mastermodell (2) die Fixierschraube (4) mit mindestens vier Steigungen (P) in das Innengewinde (6a) eingegriffen ist.

5. Baugruppe (1) nach einem der Ansprüche 1 bis 4, **dadurch gekennzeichnet, dass**:
- die Baugruppe (1) vorgesehen ist, mit einem Zahnprothesenelement (5) in Form eines transfixierten Mehrfach-Prothesenankers (7) kombiniert zu werden,
- der Gewindehohlraum (6) in einem Vorsprung (8) mit einem distalen Abschnitt (8a) ausgebildet ist, der dazu vorgesehen ist, zumindest teilweise in einen entsprechenden hohlen Sitz (7a) einzugreifen, der in dem besagten transfixierten Mehrfach-Prothesenanker (7) ausgebildet ist.

6. Baugruppe (1) nach einem der Ansprüche 1 bis 4, **dadurch gekennzeichnet, dass**:
- die Baugruppe (1) vorgesehen ist, mit einem Zahnprothesenelement (5) in Form eines transfixierten Mehrfach-Prothesenankers (7) kombiniert zu werden,
- der Gewindehohlraum (6) in der Verlängerung eines hohlen Sitzes ausgebildet ist, wobei der hohle Sitz dazu vorgesehen ist, zumindest teilweise den distalen Abschnitt eines korrespondierenden Vorsprungs aufzunehmen, der von dem besagten transfixierten Mehrfach-Prothesenanker (7) getragen ist.

7. Baugruppe (1) nach einem der Ansprüche 5 oder 6, **dadurch gekennzeichnet, dass**:
- der distale Abschnitt (8a) des Vorsprungs (8) an seiner Außenfläche mit einer seitlichen Aussparung versehen ist und/oder
- der hohle Sitz (7a) an seiner Innenfläche mit einer seitlichen Aussparung versehen ist.

8. Baugruppe (1) nach einem der Ansprüche 5 bis 7, **dadurch gekennzeichnet, dass**:
- sie ferner künstliches Zahnfleisch (9) umfasst, das zum Auftragen auf dem Mastermodell (2) vorgesehen ist,
- eines der Mastermodelle (2) und das künstliche Zahnfleisch (9) einen Vorsprung (8) aufweisen, der mit einem Abschnitt (8b) versehen ist, der dazu vorgesehen ist, zumindest teilweise in einen entsprechenden hohlen Sitz (9a) einzugreifen, der in dem anderen Mastermodell (2) und dem künstlichen Zahnfleisch (9) ausgebildet ist.

9. Baugruppe nach Anspruch 8, **dadurch gekennzeichnet, dass**:
- der Abschnitt (8b) des Vorsprungs (8) an seiner Außenfläche mit einer seitlichen Aussparung versehen ist und/oder
- der hohle Sitz (9a) an seiner Innenfläche mit einer seitlichen Aussparung versehen ist.

10. Baugruppe (1) nach einem der Ansprüche 1 bis 4, **dadurch gekennzeichnet, dass**:
- die Baugruppe (1) vorgesehen ist, mit einem Zahnprothesenelement (5) in Form eines Abutments (10) einer Einzelzahnprothese kombiniert zu werden,
- eine hohle Anschlussbuchse (11), vorgesehen zur Aufnahme des besagten Abutments (10) einer Einzelzahnprothese, an der Mündung des Gewindehohlraums (6) ausgebildet ist.

11. Baugruppe (1) nach Anspruch 10, **dadurch gekennzeichnet, dass** die hohle Anschlussbuchse (11) einen unrunden Querschnitt aufweist.

12. Baugruppe (1) nach einem der Ansprüche 1 bis 4, **dadurch gekennzeichnet, dass**:
- die Baugruppe (1) vorgesehen ist, mit einem Zahnprothesenelement (5) in Form eines Abutments (10) einer Einzelzahnprothese kombiniert zu werden,
- der Gewindehohlraum (6) in einem distalen Abschnitt des Vorsprungs ausgebildet ist, der dazu vorgesehen ist, zumindest teilweise in einen korrespondierenden hohlen Sitz einzugreifen, der in dem besagten Abutments (10) einer Einzelzahnprothese ausgebildet ist.

13. Baugruppe (1) nach Anspruch 12, **dadurch gekennzeichnet, dass**:
- der Abschnitt des Vorsprungs an seiner Außenfläche mit einer seitlichen Aussparung versehen ist und/oder
- der hohle Sitz an seiner Innenfläche mit einer seitlichen Aussparung versehen ist.

14. Baugruppe (1) nach einem der Ansprüche 11 bis 13, **dadurch gekennzeichnet, dass**:
- sie ferner künstliches Zahnfleisch (12) umfasst, das zum Auftragen auf dem Mastermodell (2) vorgesehen ist,
- eines der Mastermodelle (2) und das künstliche Zahnfleisch (12) eine Protuberanz (13) aufweisen, die dazu vorgesehen ist, zumindest teilweise in einen entsprechenden hohlen Sitz (12a) einzugreifen, der in dem anderen Mastermodell (2) und dem künstlichen Zahnfleisch (12) ausgebildet ist.

15. Baugruppe (1) nach Anspruch 14, **dadurch gekennzeichnet, dass**:
- die Protuberanz (13) an ihrer Außenfläche mit einer seitlichen Aussparung versehen ist und/oder
- der hohle Sitz (12a) an seiner Innenfläche mit einer seitlichen Aussparung versehen ist.

16. Baugruppe (1) nach einem der Ansprüche 1 bis 15, **dadurch gekennzeichnet, dass** sich das Profil des Außengewindes (4a) der Fixierschraube (4) von dem Innengewindeprofil des Gewindehohlraums des Implantats im Mund des Patienten unterscheidet, sodass die Fixierschraube (4) dann nicht durch Einschrauben in die Gewindehöhle des Implantats im Mund des Patienten in Eingriff gebracht und/oder gehalten werden kann.

17. Verfahren zur Herstellung eines Mastermodells (2) zur Konfektionierung einer Zahnprothese aus einer dreidimensionalen Computermodell-Computerdatei des wiederherzustellenden Gebisses des Patienten, die aus einem intraoralen Scan der Mundhöhle des Patienten resultiert, wobei das Mastermodell (2) wenigstens einen Gewindehohlraum (6) mit einem Innengewinde (6a) aufweist, vorgesehen zur Aufnahme einer Fixierschraube (4) mit einem Außengewinde (4a), vorgesehen zum lösbaren Fixieren eines Zahnprothesenelements (5, 7, 10) am Mastermodell (2), wobei das Verfahren einen Schritt aufweist, der, auf der dreidimensionalen Computermodellierung, mindestens eine Referenzfläche (S) einschließt, die dazu vorgesehen ist, während der Herstellung des Mastermodells (2) durch additive Technologie und korrespondierend zu einer Referenzfläche eines Zahnimplantats im Mund des Patienten realisiert zu werden, **dadurch gekennzeichnet, dass** während der Herstellung des Mastermodells (2) das Innengewinde (6a) durch additive Technologie realisiert wird.

18. Verwendung einer Baugruppe (1) nach einem der Ansprüche 1 bis 16 zur Herstellung, Einstellung oder Steuerung eines Zahnprothesenelements (5, 7, 10) durch einen Zahntechniker, **dadurch gekennzeichnet, dass** der Zahntechniker:
- das besagte Zahnprothesenelement (5, 7, 10) direkt unterstützend auf der Referenzfläche (S) des Mastermodells (2) aufträgt,
- das besagte Zahnprothesenelement (5, 7, 10) am Mastermodell (2) durch Einschrauben der Fixierschraube (4) in den Gewindehohlraum (6) des Mastermodells (2) fixiert.

## Claims

1. A kit (1) for preparing a dental prosthesis, said kit having:
- a master model (2) manufactured by means an of additive technology using an arrangement of material in successive layers (3), such as 3D printing, the master model (2) having at least one reference surface (S) intended to receive the dental prosthesis element (5, 7, 10) bearing thereon, said reference surface (S) being produced during the manufacture of the master model (2) by additive technology,
- a fixing screw (4) with an outer thread (4a) intended to removably fix a dental prosthesis element (5, 7, 10) on the master model (2),
wherein:
- the master model (2) has at least one threaded cavity (6), of which the inner thread (6a), intended to receive said fixing screw (4) by screwing, is produced during the manufacture of the master model (2) by additive technology,
- the outer thread (4a) of the fixing screw (4) has:
• a pitch (P) greater than or equal to 10 times the thickness (E) of the layers (3),
• a thread height (H) greater than or equal to 5 times the thickness (E) of the layers (3).

2. The kit (1) as claimed in claim 1, wherein the outer thread (4a) of the fixing screw (4) does not have a metric profile.

3. The kit (1) as claimed in either of claims 1 and 2, wherein the outer thread (4a) of the fixing screw (4) has a trapezoidal profile.

4. The kit (1) as claimed in any one of claims 1 through 3, wherein the fixing screw (4) and the threaded cavity (6) are configured such that, when a dental prosthesis element (5, 7, 10) is fixed on the master model (2), the fixing screw (4) is engaged in the inner thread (6a) along at least four pitches (P).

5. The kit (1) as claimed in any one of claims 1 through 4, wherein:
- the kit (1) is intended to be combined with a dental prosthesis element (5) in the form of a transfixed multiple prosthesis frame (7),
- the threaded cavity (6) is formed in an excrescence (8) with a distal segment (8a) intended to engage at least partially in a corresponding hollow seat (7a) formed in said transfixed multiple prosthesis frame (7).

6. The kit (1) as claimed in any one of claims 1 through 4, wherein:
- the kit (1) is intended to be combined with a dental prosthesis element (5) in the form of a transfixed multiple prosthesis frame (7),
- the threaded cavity (6) is formed in the continuation of a hollow seat, said hollow seat being intended to receive at least part of the distal segment of a corresponding excrescence carried by said transfixed multiple prosthesis frame (7).

7. The kit (1) as claimed in either of claims 5 and 6, wherein:
- the distal segment (8a) of the excrescence (8) is provided with a lateral clearance on its outer surface, and/or
- the hollow seat (7a) is provided with a lateral clearance on its inner surface.

8. The kit (1) as claimed in any one of claims 5 through 7, wherein:
- it additionally comprises a false gum (9) intended to be attached to the master model (2),
- one of master model (2) and false gum (9) has an excrescence (8) provided with a segment (8b) intended to engage at least partially in a corresponding hollow seat (9a) formed in the other of master model (2) and false gum (9).

9. The kit as claimed in claim 8, wherein:
- the segment (8b) of the excrescence (8) is provided with a lateral clearance on its outer surface, and/or
- the hollow seat (9a) is provided with a lateral clearance on its inner surface.

10. The kit (1) as claimed in any one of claims 1 through 4, wherein:
- the kit (1) is intended to be combined with a dental prosthesis element (5) in the form of an abutment (10) of a single dental prosthesis,
- a hollow connection socket (11) intended to receive said abutment (10) of a single dental prosthesis is formed at the mouth of the threaded cavity (6).

11. The kit (1) as claimed in claim 10, wherein the hollow connection socket (11) has a non-circular cross section.

12. The kit (1) as claimed in any one of claims 1 through 4, wherein:
- the kit (1) is intended to be combined with a dental prosthesis element (5) in the form of an abutment (10) of a single dental prosthesis,
- the threaded cavity (6) is formed in an excrescence with a distal segment intended to engage at least partially in a corresponding hollow seat formed in said abutment (10) of a single dental prosthesis.

13. The kit (1) as claimed in claim 12, wherein:
- the distal segment of the excrescence is provided with a lateral clearance on its outer surface, and/or
- the hollow seat is provided with a lateral clearance on its inner surface.

14. The kit (1) as claimed in any one of claims 11 through 13, wherein:
- it additionally comprises a false gum (12) intended to be attached to the master model (2),
- one of master model (2) and false gum (9) has a protuberance (13) intended to engage at least partially in a corresponding hollow seat (12a) formed in the other of master model (2) and false gum (9).

15. The kit (1) as claimed in claim 14, wherein:
- the protuberance (13) is provided with a lateral clearance on its outer surface, and/or
- the hollow seat (12a) is provided with a lateral clearance on its inner surface.

16. The kit (1) as claimed in any one of claims 1 through 15, wherein the profile of the outer thread (4a) of the fixing screw (4) is different from the inner thread profile of the threaded cavity of the implant in the mouth of the patient, such that this fixing screw (4) cannot then be engaged and/or retained by screwing in the threaded cavity of the implant in the mouth of the patient.

17. A method for manufacturing a master model (2) for preparation of a dental prosthesis on the basis of a computer file of three-dimensional computerized modeling of the patient dentition that is to be restored, obtained by intraoral scanning of the oral cavity of the patient, said master model (2) having at least one threaded cavity (6) with an the inner thread (6a) designed to receive a fixing screw (4) with an outer thread (4a) for detachably attaching a dental prosthesis element (5, 7, 10) on the master model (2), said method comprising a step in which at least one reference surface (S) intended to be produced during the manufacture of the master model (2) by additive technology, and corresponding to a reference surface of a dental implant in the mouth of the patient, is included in the three-dimensional computerized modeling, **characterized in that**, during the manufacture of the master model (2), the inner thread (6a) is produced by additive technology.

18. The use of a kit (1) as claimed in any one of claims 1 through 16 for the manufacture, adjustment or control of a dental prosthesis element (5, 7, 10) by a prosthetist, wherein the prosthetist:
- attaches said dental prosthesis element (5, 7, 10) such that it bears directly on the reference surface (S) of the master model (2),
- fixes said dental prosthesis element (5, 7, 10) to the master model (2) by screwing the fixing screw (4) into the threaded cavity (6) of the master model (2).
